# EUROPÄISCHE PATENTSCHRIFT

(11) **EP 2 151 589 B1**
(45) Veröffentlichungstag und Bekanntmachung des Hinweises auf die Patenterteilung: **09.01.2013**
(21) Anmeldenummer: 09166001.9
(22) Anmeldetag: 21.07.2009
(51) Int. Cl.: F16B 5/02

(54) **Teleskophülse**
Telescopic cover
Enveloppe de télescope

(30) Priorität: 06.08.2008 DE 102008036610
(43) Veröffentlichungstag der Anmeldung: 10.02.2010
(73) Patentinhaber: EJOT Baubefestigungen GmbH, 57302 Bad Berleburg (DE)
(72) Erfinder: Hackler, Erhard, 57319, Bad Berleburg (DE)
(74) Vertreter: Heselberger, Johannes

(56) Entgegenhaltungen:
- EP-A1- 0 389 783
- DE-U1- 8 529 669
- US-A- 5 704 572

## Beschreibung

Die vorliegende Erfindung bezieht sich auf eine Teleskophülse, welche insbesondere zur Befestigung von dünnwandigen Fassadenbekleidungen aus Aluminium an einer Unterkonstruktion dient und auf ein entsprechendes Montageverfahren.

Aus der DE 198 40 521 C1 ist ein Befestigungselement zur Befestigung von Dämmstoffplatten an einer Unterkonstruktion bekannt. Das Befestigungselement umfasst eine erste Hülse mit einer Druckplatte mit einer Einführöffnung sowie einen an der Unterseite der Druckplatte angebrachten zentrischen Ansatz. Des Weiteren ist eine in die erste Hülse einbringbare zweite Hülse vorgesehen, die in der ersten Hülse verschiebbar ist, sowie ein in die zweite Hülse einbringbarer aufspreizbarer Dübel, der vorzugsweise in der zweiten Hülse verschiebbar ist, und ein in den Dübel einbringbares Spreizelement zum Aufspreizen des Dübels.

Die DE 28 49 140 offenbart einen Spreizdübel zur Abstandsbefestigung von Verkleidungselementen an Bauwerksteilen, mit einem in eine bauwerksseitige Aufnahmeöffnung einzuführenden Spreizabschnitt, einem an den Spreizabschnitt anschließenden Halsbereich und einen am Halsbereich axial unverrückbar angeordneten Abstützteil für die Verkleidungselemente, wobei der Spreizabschnitt von einem den Halsbereich durchsetzenden Spreizelement aufspreizbar und ein die Verkleidungselemente gegen das Abstützteil spannbarer Gegenhalter vorgesehen ist. Der Gegenhalter kann dabei als am Halsbereich festlegbare Hülse mit an den Verkleidungselementen angreifbarer Gegenschulter ausgebildet sein. Der Halsbereich weist dann eine von dessen rückwärtigem Ende her vorlaufende Gewindebohrung auf, in die sich die mit einem korrespondierenden Außengewinde versehene Hülse eindrehen lässt.

Die DE 24 37 308 beschreibt eine Befestigungsvorrichtung mit einem Anker und vorzugsweise einem zugehörigen Dübel zum Anbringen von Leichtbauplatten an Wänden aus Mauerwerk, wobei der Anker aus drei Elementen mit unterschiedlichem Durchmesser gebildet ist, und zwar einem in der Wand verankerbaren Spreizstift zum Aufspreizen des Dübels mit einem sich daran anschließenden Ankerschaft, einem mit einer Ansatzhülse versehenen Kopf sowie einer diese beiden Elemente verbindende Zwischenhülse. Diese Elemente sind auf der der Wand abgewandten Seite unter Reibschluss teleskopartig übereinandersteckbar und gegeneinander verschiebbar und der Widerstand des Spreizstiftes beim Eintreiben in den Dübel ist geringer als der Widerstand beim Zusammenschieben der Ankerelemente.

Die US 5,704,572 beschreibt ein zweiteiliges Hülsenelement zum Befestigen eines Fixierteils über ein Führungsteil, das ein Befestigungselement aufnimmt und führt, an einer Oberfläche. Im eingetrieben Zustand entsteht zwischen Fixierteil und Führungsteil ein Ringspalt. Dieser Ringspalt gestattet eine Expansion des, durch das Eintreiben deformierten, Führungsteils.

Die genannten Stand der Technik Lösungen sind jedoch nicht für die Befestigung von dünnwandigen Fassadenbekleidungen, wie z. B. aus Aluminium, konzipiert, zudem könnten - etwa bei starker Sonneneinstrahlung oder großer Kälte - in Folge von Längenausdehnungen (thermische Belastung) Beschädigungen an den Anbauteilen und Befestigungsmitteln auftreten.

Es ist daher die Aufgabe der vorliegenden Erfindung, ein Hülsenelement bereitzustellen, das eine leichte und schnelle Montage von insbesondere dünnwandigen Aluminiumfassadenverkleidungen gewährleistet und welches flexibel auf größere thermische Belastungen reagiert.

Diese Aufgabe wird erfindungsgemäß gelöst durch ein Hülsenelement, insbesondere zur Befestigung eines dünnwandigen Anbauteils an einer Unterkonstruktion, aufweisend einen oberen Teil zum Führen eines Befestigungselements sowie einen unteren Teil zum Fixieren des Hülsenelements in einer Öffnung des Anbauteils, wobei der untere Fixierteil einen größeren Durchmesser aufweist als der obere Führungsteil, wobei der obere Führungsteil und der untere Fixierteil lösbar miteinander verbunden sind und wobei der obere Führungsteil in etwa dieselbe Höhe aufweist wie das Anbauteil. Die Aufgabe wird des Weiteren gelöst durch ein Verfahren zur Montage eines solchen Hülsenelements, aufweisend die Schritte: a) Einsetzen des Hülsenelements in eine Öffnung des Anbauteils, b) Eintreiben eines Befestigungselements in die Unterkonstruktion, wobei c) das obere Führungsteil und das untere Fixierteil voneinander getrennt und gegeneinander verschoben werden.

In einer bevorzugten Ausführungsform der Erfindung ist zwischen dem oberen Führungsteil und dem unteren Fixierteil ein Steg angeordnet. Der Steg schafft den gewünschten Abstand zwischen der Außenseite des Führungsteils und der Innenseite des Fixierteils und erleichtert das Trennen der beiden Teile.

In einer anderen bevorzugten Ausführungsform der Erfindung weist der Steg eine Sollbruchstelle auf. Auf diese Weise wird sichergestellt, dass bei der Montage nicht allzu hohe Kräfte aufgewandt werden müssen, um das Führungsteil von dem Fixierteil zu lösen bzw. zu trennen. Dadurch kann eine potentielle Deformation des Anbauteils wirksam verhindert werden.

In einer weiteren bevorzugten Ausführungsform der Erfindung sind der Führungsteil und der Fixierteil in gelöstem bzw. getrenntem Zustand gegeneinander verschiebbar. Hierdurch kann einerseits eine sichere Führung des Befestigungselements und andererseits ein stabiler Halt des montierten Anbauteils gewährleistet werden.

In einer noch weiteren bevorzugten Ausführungsform der Erfindung wird, wenn der Führungsteil und der Fixierteil gegeneinander verschoben worden sind, zwischen der Außenseite des Führungsteils und der Innenseite des Fixierteils ein Ringspalt gebildet. Die Größe dieses Ringspalts korreliert mit der Länge des Stegs zwischen den beiden Hülsenteilen. Andererseits können der Führungsteil und der Fixierteil an ihrer Außen- bzw. Innenfläche jeweils Aussparungen aufweisen, die eine Vergrößerung des Ringspalts bewirken. Generell ist festzuhalten, dass der Ringspalt derart ausgestaltet ist, dass er Längenänderungen des Anbauteils zulässt, ohne dass dabei Spannungen entstehen. Dies ist insbesondere bei Fassadenelementen aus Aluminium oder anderen Metallen wichtig, bei denen aufgrund thermischer Einwirkungen, wie zum Beispiel starker Sonneneinstrahlung oder ausgeprägter Kälte, Materialausdehnungen oder - kontraktionen auftreten können, die wiederum eine Beschädigung des Anbauteils (z. B. in der Umgebung des Befestigungselements) zur Folge haben können. Die Vorzüge des Ringspalts kommen allerdings auch bei anderen Materialien wie Holz oder Kunststoff zum Tragen. Entscheidend ist, dass der Ringspalt groß genug ist bzw. ausreichend Spielraum bietet, damit mögliche Spannungen im Material abgepuffert werden können. Ein sehr kleiner Ringspalt, der lediglich das gegeneinander Verschieben zweier eng aneinanderliegender Hülsenteile bezwecken oder erleichtern soll wäre hierfür ggf. nicht ausreichend.

In einer wiederum anderen bevorzugten Ausführungsform der Erfindung weisen der Führungsteil und der Fixierteil jeweils unterschiedlich geformte Querschnitte auf. Die Querschnitte der beiden Hülsenteile müssen nicht, wie es üblicher Weise der Fall ist, jeweils kreisförmig ausgebildet sein. Der Führungsteil kann beispielsweise auch mehreckig oder oval ausgebildet sein. Dabei kann es auch sein, dass eine oder mehrere Ecken des Führungsteils an der Innenwand des Fixierteils anliegen, so dass unter Umständen kein durchgehender Ringspalt entsteht. Hierdurch würde aber die Anpassungsfähigkeit des Hülsenelements nicht verloren gehen, es könnte sogar, je nach Anwendung, eine noch bessere Führung bzw. Zentrierung des Befestigungselements erreicht werden.

Vorzugsweise weist der Fixierteil einen nach außen gerichteten Kragen auf. Das Fixierteil liegt mit dem Kragen an der Außenfläche des Anbauteils auf, so dass das Hülsenelement bei der Montage nicht durchrutschen kann. Auf diese Weise wird also ein sicherer Halt im Anbauteil erreicht.

In einer noch weiteren bevorzugten Ausführungsform der Erfindung liegt im Endmontagezustand die Unterseite des Befestigungselementkopfes auf dem Kragen des Fixierteils auf und die Unterseite bzw. Unterkante des Führungsteils auf der Unterkonstruktion. Hierdurch wird ein besonders stabiler Halt des Befestigungselements in dem Hülsenelement erreicht. Als Befestigungselemente dienen regelmäßig Schrauben, es sind aber auch andere Befestigungselemente wie z. B. Nägel oder Bolzen etc. denkbar.

Anhand der nachfolgenden Zeichnungen sollen das erfindungsgemäße Hülsenelement und seine Montage näher erläutert werden. Es zeigen:
- Fig. 1:: eine Seitenansicht eines an einer Unterkonstruktion befestigten Anbauteils;
- Fig. 2a: eine Querschnittsansicht entlang der Linie II - II eines erfindungsgemäßen Hülsenelements im unmontierten Zustand;
- Fig. 2b:: eine Seitenansicht eines erfindungsgemäßen Hülsenelements im unmontierten Zustand;
- Fig. 3:: eine Querschnittsansicht entlang der Linie III - III gemäß Fig. 1 eines mittels eines erfindungsgemäßen Hülsenelements an einer Unterkonstruktion befestigten Anbauteils.

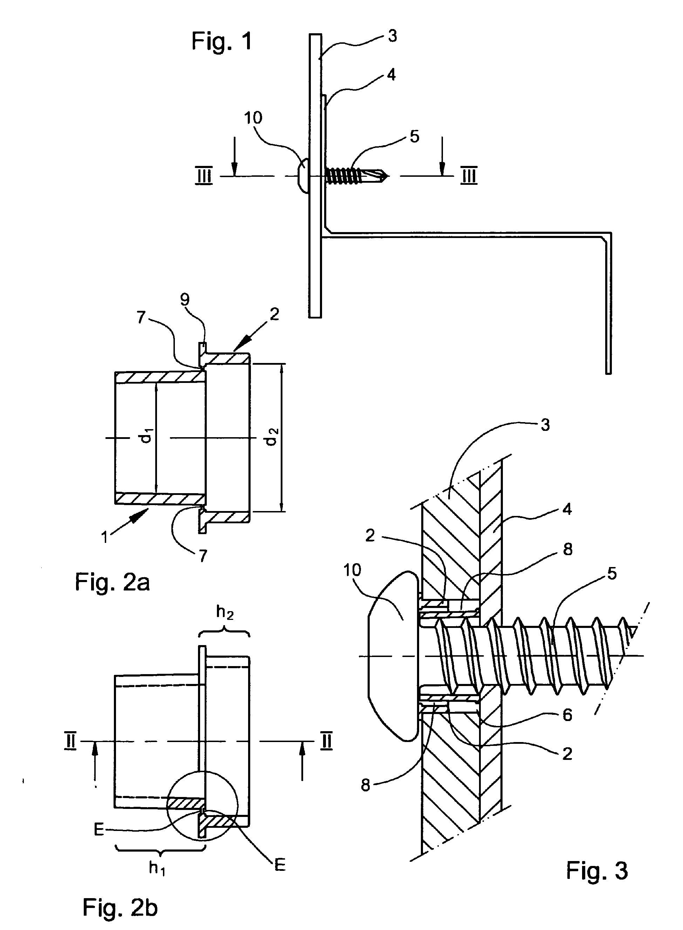

In Fig. 1 wird ein dünnwandiges Anbauteil 3 gezeigt, welches mittels einer Schraube 5 mit einem Schraubenkopf 10 an einer als Unterkonstruktion dienenden Halterung 4 (etwa einem Profilblech) angebracht ist. Derartige Halterungen bzw. Profilbleche werden regelmäßig zur Befestigung von Fassadenbekleidungen aus Aluminium verwendet. Nicht gezeigt wird allerdings in dieser Figur das zur Befestigung und Führung der Schraube 5 verwendete erfindungsgemäße Hülsenelement.

Dieses wird allerdings in den Figuren 2a und 2b näher veranschaulicht. Das erfindungsgemäße Hülsenelement besteht aus einem oberen Teil 1 zum Führen bzw. Zentrieren eines Befestigungselements 5 sowie einem unteren Teil 2 zum Fixieren des Hülsenelements in einer Öffnung 6 eines Anbauteils 3. Der untere Fixierteil 2 weist einen größeren Durchmesser d₂ auf als der obere Führungsteil 1 (Durchmesser d₁). Der obere Führungsteil 1 und der untere Fixierteil 2 sind lösbar miteinander verbunden, wobei der obere Führungsteil 1 und ggf. auch der untere Fixierteil 2 in etwa dieselbe Höhe aufweisen wie das Anbauteil (vgl. Fig. 3). Des Weiteren ist zwischen dem oberen Führungsteil 1 und dem unteren Fixierteil 2 ein Steg 7 angeordnet, welcher abreißbar ausgebildet ist. Wie zu sehen, umfasst der Steg 7 üblicher Weise Einkerbungen E, die als Sollbruchstelle fungieren, wenn beim Setzen der Schraube 5 Druck auf das Hülsenelement aufgebracht wird. Im gelösten Zustand sind dann der obere Führungsteil 1 und der untere Fixierteil 2 gegeneinander verschiebbar. Der untere Fixierteil 2 weist darüber hinaus an seinem oberen Ende einen Kragen 9 auf, der eine Auflagefläche für das Hülsenelement auf dem Anbauteil 3 bereitstellen soll. In Fig. 2b sind insbesondere die Höhenverhältnisse des oberen Führungsteils 1 und des unteren Fixierteils 2 dargestellt. Wie zu sehen, weist der obere Führungsteil 1 eine Höhe h₁ auf und der untere Fixierteil 2 eine Höhe h_{2.} Die Höhe h₂ des unteren Fixierteils 2 wird dabei gemessen von der Oberkante des Kragens 9 bis zur Unterkante des Fixierteils 2. Die Höhe h₁ des oberen Führungsteils 1 wird gemessen von der Oberkante des Führungsteils 1 bis zu dessen Unterkante. Mit anderen Worten, die Höhen h₁ und h₂ überschneiden sich im Bereich des Kragens 9 des Fixierteils 2. In der Regel sind die Höhen h₁ und h₂ ungefähr gleich groß, wobei in manchen Ausführungsformen die Höhe h₁ tendenziell größer ausfällt als die Höhe h₂.

In Fig. 3 wird schließlich das erfindungsgemäße Hülsenelement im montierten Zustand gezeigt. Für die Montage ist zunächst der Schritt des Einsetzens des Hülsenelements in die Öffnung 6 des Anbauteils 3 nötig. Anschließend wird das Befestigungselements 5 in die Unterkonstruktion 4 eingetrieben, wobei das obere Führungsteil 1 und das untere Fixierteil 2 voneinander getrennt und gegeneinander verschoben werden. Wie zu sehen, wird in diesem Endmontagezustand ein Ringspalt 8 zwischen der Außenseite des Führungsteils 1 und der Innenseite des Fixierteils 2 gebildet. Dieser Ringspalt 8 ist in der Praxis so ausgestaltet, dass er Längenänderungen des Anbauteils 3 zulässt, ohne dass dabei Spannungen entstehen. Die Unterseite des Befestigungselementkopfes 10 liegt auf dem Kragen 9 des Fixierteils 2 -auf. In der Regel berührt hingegen das Fixierteil 2, welches mit dem Kragen 9 auf der Außenseite des Anbauteils 3 aufliegt mit seiner Unterseite bzw. Unterkante nicht die Unterkonstruktion 4, so dass sich der Ringspalt 8 von der Unterseite des Befestigungselementkopfs 10, an den Trennstellen T des Führungs- bzw. des Fixierteils 1, 2 vorbei, bis zur Oberseite der Unterkonstruktion 4 erstreckt. Die Höhe h₁ des Führungsteils 1 kann unter Umständen (wie in Fig. 3 zu sehen) größer sein als die Höhe h₂ des Fixierteils 2.

### Bezugszeichenliste:

- 1: oberer Führungsteil
- 2: unterer Fixierteil
- 3: Anbauteil
- 4: Unterkonstruktion
- 5: Befestigungselement
- 6: Öffnung
- 7: Steg
- 8: Ringspalt
- 9: Kragen
- 10: Befestigungselementkopf
- d₁: Durchmesser oberer Führungsteil
- d₂: Durchmesser unterer Fixierteil
- h: Höhe des Anbauteils
- h₁: Höhe des oberen Führungsteils
- h₂: Höhe des unteren Fixierteils
- E: Einkerbungen
- T: Trennstellen

## Patentansprüche

1. Hülsenelement, insbesondere zur Befestigung eines dünnwandigen Anbauteils (3) an einer Unterkonstruktion (4), aufweisend einen Führungsteil (1) zum Führen eines Befestigungselements (5) sowie einen Fixierteil (2) zum Fixieren des Hülsenelements in einer Öffnung (6) des Anbauteils (3), wobei der Fixierteil (2) einen größeren Durchmesser aufweist als der Führungsteil (1),
**dadurch gekennzeichnet, dass**
der Führungsteil (1) und der Fixierteil (2) über eine Sollbruchstelle lösbar miteinander verbunden sind und dass der Fixierteil (2) einen nach außen gerichteten Kragen (9) aufweist, der derart ausgestaltet ist, dass die Unterseite eines Befestigungselementkopfes (10) des Befestigungselements (5) im Endmontagezustand auf dem Kragen (9) des Fixierteils (2) aufliegt.

2. Hülsenelement gemäß Anspruch 1, **dadurch gekennzeichnet, dass** der Führungsteil (1) und der Fixierteil (2) in gelöstem Zustand gegeneinander verschiebbar sind.

3. Hülsenelement gemäß einem der vorhergehenden Ansprüche, **dadurch gekennzeichnet, dass** wenn der Führungsteil (1) und der Fixierteil (2) gegeneinander verschoben worden sind, zwischen der Außenseite des Führungsteils (1) und der Innenseite des Fixierteils (2) ein Ringspalt (8) gebildet wird.

4. Hülsenelement gemäß Anspruch 3, **dadurch gekennzeichnet, dass** der Ringspalt (8) derart ausgestaltet ist, dass er Längenänderungen des Anbauteils (3) zulässt, ohne dass dabei Spannungen entstehen.

5. Hülsenelement gemäß einem der vorhergehenden Ansprüche, **dadurch gekennzeichnet, dass** der Führungsteil (1) und der Fixierteil (2) jeweils unterschiedlich geformte Querschnitte aufweisen.

6. Verfahren zur Montage insbesondere eines dünnwandigen Anbauteils mittels eines Hülsenelements mit einem Führungsteil (1) und einem Fixierteil (2), welche lösbar miteinander über eine Soolbruchstelle miteinander verbunden sind, aufweisend die folgenden Schritte:
a) Einsetzen des Hülsenelements in eine Öffnung (6) des Anbauteils (3);
b) Eintreiben eines Befestigungselements (5) in die Unterkonstruktion (4); wobei das obere Führungsteil (1) und das untere Fixierteil (2) voneinander getrennt und gegeneinander verschoben werden und die Unterseite eines Befestigungselementkopfes (10) des Befestigungselements (5) im Endmontagezustand auf einem nach außen gerichteten Kragen (9) des Fixierteils (2) aufliegt.

7. Verfahren gemäß Anspruch 6, wobei im Endmontagezustand ein Ringspalt (8) zwischen der Außenseite des Führungsteils (1) und der Innenseite des Fixierteils (2) gebildet wird.

8. Verfahren gemäß Anspruch 7, wobei der Ringspalt derart ausgestaltet ist, dass er Längenänderungen des Anbauteils (3) zulässt, ohne dass dabei Spannungen entstehen.

9. Verfahren gemäß einem der Ansprüche 6 bis 8, wobei im Endmontagezustand die Unterkante des Führungsteils (1) auf der Oberseite der Unterkonstruktion (4) aufliegt.

## Claims

1. Sleeve element, in particular for fastening a thin-walled attachment part (3) to a substructure (4), comprising a guide part (1) for guiding a fastening element (5) as well as a fixing part (2) for fixing the sleeve element in an opening (6) of the attachment part (3), wherein the fixing part (2) comprises a diameter that is larger than the diameter of the guide part (1),
**characterized in that**
the guide part (1) and the fixing part (2) are detachably connected to one another via a predetermined breaking point and that the fixing part (2) comprises an outwardly projecting collar (9) which is formed so that the bottom side of a fastening element head (10) of the fastening element (5) rests in the assembled state on the collar (9) of the fixing part (2).

2. Sleeve element according to claim 1, **characterized in that** in the loosened state the guide part (1) and the fixing part (2) are movable relatively to one another.

3. Sleeve element according to one of the preceding claims, **characterized in that** if the guide part (1) and the fixing part (2) are moved relatively to one another, an annular gap (8) is formed between the outer side of the guide part (1) and the inner side of the fixing part (2).

4. Sleeve element according to claim 3, **characterized in that** the annular gap (8) is formed so that it allows a change in length of the attachment part (3) without causing tensions to arise.

5. Sleeve element according to one of the preceding claims, **characterized in that** the guide part (1) and the fixing part (2) each comprise differently shaped cross sections.

6. Method for mounting an in particular thin-walled attachment part by means of a sleeve element having a guide part (1) and a fixing part (2), which are detachably connected to one another via a predetermined breaking point, comprising the following steps of:
a) inserting the sleeve element in an opening (6) of the attachment part (3);
b) driving a fastening element (5) into the substructure (4), wherein the upper guide part (1) and the lower fixing part (2) are detached and moved relatively to one another and the bottom side of a fastening element head (10) of the fastening element (5) rests in the assembled state on an outwardly projecting collar (9) of the fixing part (2).

7. Method according to claim 6, wherein in the assembled state an annular gap (8) is formed between the outer side of the guide part (1) and the inner side of the fixing part (2).

8. Method according to claim 7, wherein the annular gap (8) is formed so that it allows a change in length of the attachment part (3) without causing tensions to arise.

9. Method according to one of the claims 6 to 8, wherein in the assembled state the bottom edge of the guide part (1) rests on the upper side of the substructure (4).

## Revendications

1. Élément de douille, en particulier pour la fixation d'une pièce rapportée (3) à paroi mince sur une substructure (4), lequel présente une pièce de guidage (1) servant à guider un élément de fixation (5) et une pièce de fixation (2) servant à fixer l'élément de douille dans une ouverture (6) de la pièce rapportée (3), la pièce de fixation (2) ayant un plus grand diamètre que la pièce de guidage (1), **caractérisé en ce que** la pièce de guidage (1) et la pièce de fixation (2) sont reliées entre elles de manière détachable par une zone destinée à la rupture, et **en ce que** la pièce de fixation (2) présente une collerette (9) dirigée vers l'extérieur qui est configurée de façon que, dans l'état de montage final, la face inférieure d'une tête d'élément de fixation (10) de l'élément de fixation (5) repose sur la collerette (9) de la pièce de fixation (2).

2. Élément de douille selon la revendication 1, **caractérisé en ce que**, dans l'état desserré, la pièce de guidage (1) et la pièce de fixation (2) sont déplaçables l'une par rapport à l'autre.

3. Élément de douille selon une des revendications précédentes, **caractérisé en ce que**, lorsque la pièce de guidage (1) et la pièce de fixation (2) ont été déplacées l'une par rapport à l'autre, une fente annulaire (8) est formée entre le côté extérieur de la pièce de guidage (1) et le côté intérieur de la pièce de fixation (2).

4. Élément de douille selon la revendication 3, **caractérisé en ce que** la fente annulaire (8) est configurée de façon à permettre des variations de longueur de la pièce rapportée (3) sans engendrer pour autant de tensions.

5. Élément de douille selon une des revendications précédentes, **caractérisé en ce que** la pièce de guidage (1) et la pièce de fixation (2) présentent des coupes transversales de forme différente.

6. Procédé de montage, en particulier d'une pièce rapportée à paroi mince au moyen d'un élément de douille présentant une pièce de guidage (1) et une pièce de fixation (2) qui sont reliées entre elles de manière détachable par une zone destinée à la rupture, lequel procédé présente les étapes suivantes :
a) insertion de l'élément de douille dans une ouverture (6) de la pièce rapportée (3) ;
b) enfoncement d'un élément de fixation (5) dans la substructure (4), la pièce supérieure de guidage (1) et la pièce inférieure de fixation (2) étant séparées l'une de l'autre et déplacées l'une par rapport à l'autre, et la face inférieure d'une tête d'élément de fixation (10) de l'élément de fixation (5) reposant sur une collerette (9) dirigée vers l'extérieur de la pièce de fixation (2) dans l'état de montage final.

7. Procédé selon la revendication 6, dans lequel, dans l'état de montage final, une fente annulaire (8) est formée entre le côté extérieur de la pièce de guidage (1) et le côté intérieur de la pièce de fixation (2).

8. Procédé selon la revendication 7, dans lequel la fente annulaire est configurée de façon à permettre des variations de longueur de la pièce rapportée (3) sans engendrer pour autant de tensions.

9. Procédé selon une des revendications 6 à 8, dans lequel, dans l'état de montage final, le bord inférieur de la pièce de guidage (1) repose sur la face supérieure de la substructure (4).
